# EUROPEAN PATENT APPLICATION

(11) **EP 4 427 644 A1**
(43) Date of publication of application: **11.09.2024**
(21) Application number: 24161789.3
(22) Date of filing: 06.03.2024
(51) Int. Cl.: A47J 31/44, A47J 31/52

(54) **EMULSIFYING DEVICE AND BEVERAGE MACHINE**

(30) Priority: 07.03.2023 CN 202310218364
(71) Applicant: Kalerm Technology (Suzhou) Co., Ltd, Suzhou Jiangsu 215134 (CN)
(72) Inventor: YU, Ningchao, Suzhou, 215134 (CN); XIN, Dongliang, Suzhou, 215134 (CN)
(74) Representative: ABG Intellectual Property Law, S.L.

(57) **Abstract**

The present disclosure provides an emulsifying device and a beverage machine. The emulsifying device is connected to a steam source so as to generate target liquid. The emulsifying device includes a main body, a delivering assembly, a temperature sensor, and a controller. The delivering assembly includes a first connector, and the first connector is detachably connected to the temperature sensor. The temperature sensor includes a detection probe, and the detection probe is located on at least portion of a liquid flow path for delivering source liquid from a container to a mixing chamber defined by the main body. The detection probe is detachably connected through the first connector, such that disassembly is convenient. The detection probe can be exposed when the first connector is detached, so that cleaning the detection probe is very easy, and milk temperature can be detected in real time.

## Description

### TECHNICAL FIELD

The present disclosure relates to a technical field of food or beverage preparation, and in particular, to an emulsifying device and a beverage machine.

### BACKGROUND

With improvement of people's life level, beverage machines are becoming more and more popular. For example, a coffee machine can conveniently and quickly provide coffee for users, and becomes a product usually provided in offices, entertainment places and homes. With rapid development in a field of fully automatic coffee machines, functions of coffee machines are more and more powerful. At present, most of fully automatic coffee machines on the market are provided with an emulsifying device for making milk coffee. The emulsifying device is used to fully mix three substances of air, steam and milk through their respective pipelines in a mixing chamber according to a certain proportion to form milk froth, and the milk froth and coffee are mixed and blended to generate milk coffee providing to users.

The emulsifying device is generally provided with a Venturi apparatus. The Venturi apparatus is used to mix milk and steam which are sucked in, so as to obtain hot milk or milk froth. When it is being used, milk liquid and air are mixed with steam, then sprayed into the mixing chamber to form milk froth, or only the milk liquid and the steam are mixed to make hot milk. Whether using cold milk or normal-temperature milk to make hot milk/milk coffee, quantity of sucked milk is the same, which ultimately leads to hot milk/milk coffee of finished product not reaching a standard temperature. In addition, temperatures of hot milk and milk froth made by an apparatus in the same coffee machine are different, and different milk inlet temperatures result in different milk outlet temperature differences.

Since a beverage machine is limited by its structure and cost, in a case of using a Venturi apparatus to heat milk or make milk froth, both the temperature and the flow of the steam are fixed or only can be changed within a small range. When the same Venturi apparatus is used to suck milks with different temperatures, the temperatures of hot milks (hot milk froths) made by the Venturi apparatus are different, thereby affecting the taste and quality of milk coffee. If using milks with different temperatures, the temperatures of made hot milks/milk froths are also different. It could be found that sucked milks with different temperatures will affect temperatures of finally made hot milks/hot milk froths.

In addition, because of a temperature sensor for detecting the temperature of milk is provided at a milk tank, each time it is used, the temperature sensor need be place in milk, and meanwhile, a milk tube also need be placed in, which is inconvenient. During cleaning, the temperature sensor need be removed from the machine, a manual cleaning is performed, and there is a certain operational requirement for an operator.

Therefore, further improvements need to be made to existing technologies.

### SUMMARY

An object of the present disclosure is to provide an emulsifying device which is reliable to use and convenient to clean.

Another object of the present disclosure is to provide a beverage machine which is reliable to use and convenient to clean.

For achieving one of the above objectives, the present disclosure provide an emulsifying device connected to a steam source, so as to generate target liquid. The emulsifying device includes:
a main body, defining a mixing chamber;
a delivering assembly, selectively connecting to the mixing chamber, and defining at least portion of a liquid flow path for delivering source liquid from a container to the mixing chamber;
a temperature sensor, detecting a temperature of the source liquid to be delivered to the mixing chamber; and
a controller, connected to the temperature sensor, and responding to an output of the temperature sensor;
wherein the delivering assembly includes a first connector, the first connector is detachably connected to the temperature sensor, the temperature sensor includes a detection probe, and the detection probe is located on the at least portion of the liquid flow path.

As a further improvement of an embodiment of the present disclosure, the emulsifying device includes a housing, the main body is accommodated in the housing, the detection probe extends outward from the housing.

As a further improvement of an embodiment of the present disclosure, the emulsifying device includes a housing, and the detection probe is connected to the housing and is connected to the controller by means of a wire.

As a further improvement of an embodiment of the present disclosure, the delivering assembly further includes a second connector connected to the first connector, the second connector is connected at a liquid inlet of the mixing chamber, and the detection probe is located on the liquid flow path upstream of the second connector.

As a further improvement of an embodiment of the present disclosure, at least one of the first connector and the second connector has a preset elastic variable, and a connection direction of the first connector and the detection probe and a connection direction of the second connector and the liquid inlet are parallel or at an angle.

As a further improvement of an embodiment of the present disclosure, a direction from the liquid inlet to the detection probe is inclined downward relative to a horizontal direction.

As a further improvement of an embodiment of the present disclosure, the first connector includes a probe insertion hole and a liquid insertion hole, and a connection direction of the probe insertion hole and the detection probe and a liquid input direction of the liquid insertion hole are oppositely arranged along a straight line.

As a further improvement of an embodiment of the present disclosure, the first connector includes a probe insertion hole and a liquid insertion hole, and a connection direction of the probe insertion hole and the detection probe and a liquid input direction of the liquid insertion hole are arranged at an angle.

As a further improvement of an embodiment of the present disclosure, a connecting channel is formed between the first connector and the second connector, the connecting channel is arranged at an angle relative to a connection direction of the first connector and the detection probe, the connecting channel is arranged at an angle relative to a connection direction of the second connector and the liquid inlet, and the connecting channel extends along a straight line.

As a further improvement of an embodiment of the present disclosure, the emulsifying device further includes a housing and a third connector, the third connector is connected between the second connector and the liquid inlet, the housing includes a front housing and a rear cover which are combined in a front-back direction, the front housing is provided with a first opening and a second opening spaced apart from each other, the third connector extends out through the first opening, the detection probe extends out through the second opening, the temperature sensor includes a connecting end connected between the detection probe and the wire, and the connecting end is supported to the rear cover.

As a further improvement of an embodiment of the present disclosure, the emulsifying device further includes a fourth connector, the first connector includes a probe insertion hole and a liquid insertion hole, a conduit is connected between the first connector and the container, and the fourth connector is connected between the conduit and the liquid insertion hole.

As a further improvement of an embodiment of the present disclosure, the first connector includes a first insertion hole, the second connector includes a second insertion hole, the third connector is configured as an insertion column, the detection probe is inserted into the first insertion hole, one end of the insertion column is inserted into the second insertion hole, and another end of the insertion column is inserted into the liquid inlet.

As a further improvement of an embodiment of the present disclosure, the emulsifying device includes a housing, the main body is detachably connected to the housing, a beverage outlet is further provided in the housing, a liquid outlet of the mixing chamber is provided in front of the beverage outlet, and the detection probe is provided behind a liquid inlet of the mixing chamber.

As a further improvement of an embodiment of the present disclosure, manners in which the controller responds to the output of the temperature sensor include at least one of the following: reminding based on a temperature of the source liquid detected exceeding or being lower than a preset temperature, stopping beverage making, controlling a flow of the source liquid, controlling a temperature of steam, and controlling a flow of the steam.

The present disclosure further related to a beverage machine, including a main body machine, wherein the main body machine is provided with the above-mentioned emulsifying device.

Compared with the existing technologies, the beneficial effect(s) according to the present disclosure is that: the liquid flow path from the container to the mixing chamber is provided with a connector detachably connected to the detection probe of the temperature sensor, hence it is unnecessary that the temperature sensor be placed in the milk container in advance for temperature measurement; since the first connector is detachably connected to the detection probe, so the disassembling is convenient; the detection probe will be exposed when the first connector is detached, cleaning the detection probe is very easy, and milk temperature can be detected in real time.

### BRIEF DESCRIPTION OF THE DRAWINGS

FIG. 1 is a schematic perspective view of an emulsifying device according to an embodiment of the present disclosure;
FIG. 2 is a schematic perspective exploded view of the emulsifying device of FIG. 1;
FIG. 3 is a front view of the emulsifying device of FIG. 1;
FIG. 4 is a schematic cross-sectional view of the emulsifying device in FIG. 3 taken along line A-A;
FIG. 5 is a schematic cross-sectional view of the emulsifying device of FIG. 3 taken along line B-B;
FIG. 6 is a schematic cross-sectional view of the emulsifying device in FIG. 3 taken along line C-C;
FIG. 7 is a schematic diagram of another structural form of a delivering assembly of the emulsifying device in FIG. 1;
FIG. 8 is a schematic perspective view in which the delivering assembly and a housing of the emulsifying device in FIG. 1 are separated;
FIG. 9 is a perspective view of the emulsifying device of FIG. 1 taken along another view angle;
FIG. 10 is a schematic diagram of a beverage machine according to an embodiment of the present disclosure.

### DETAILED DESCRIPTIONS OF THE EMBODIMENTS

The present disclosure will be described in detail below with reference to specific embodiments shown in the accompanying drawings. However, these embodiments do not limit the present disclosure, and conversion of the structures, methods, or functions made by a person having ordinary skill in the art according to these embodiments are all included within the protection scope of the present disclosure.

It should be understood that terms such as "upper", "above", "lower", "below" and the like used herein represent spatially relative positions for purposes of ease of description to describe relationship of one unit or feature relative to another unit or feature as shown in the figures. Terms of spatial relative positions may be intended to include different orientations of the device in using or operation besides the orientation shown in the figures. Terms such as "left", "right", "front", "rear", "top", or "bottom" are used with reference to the view angle of a user using a beverage machine. For example, the user stands in front of the beverage machine to get beverage.

As used herein, the terms "first", "second", and "third" may be used interchangeably to distinguish one component from another, and these terms are not intended to represent the location or importance of the various components. The terms "upstream" and "downstream" refer to relative directions which are relative to fluid flow on a fluid pathway. For example, "upstream" refers to the direction from which a fluid is flowing, "downstream" refers to the direction to which the fluid is flowing. In addition, approximate terms, such as "substantially" or "approximately", include values that are greater than or less than said value within ten percent; when used in a context of an angle or direction, such terms include angles or directions which are greater than or less than said angle or direction within ten degrees. For example, "vertical" or "horizontal" includes directions within ten degrees of a vertical or horizontal line in any direction (for example, clockwise or counterclockwise).

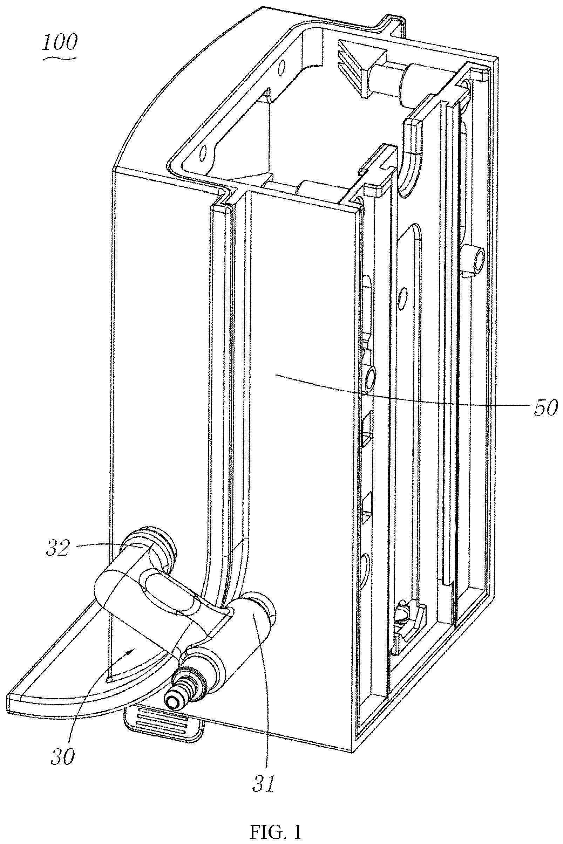

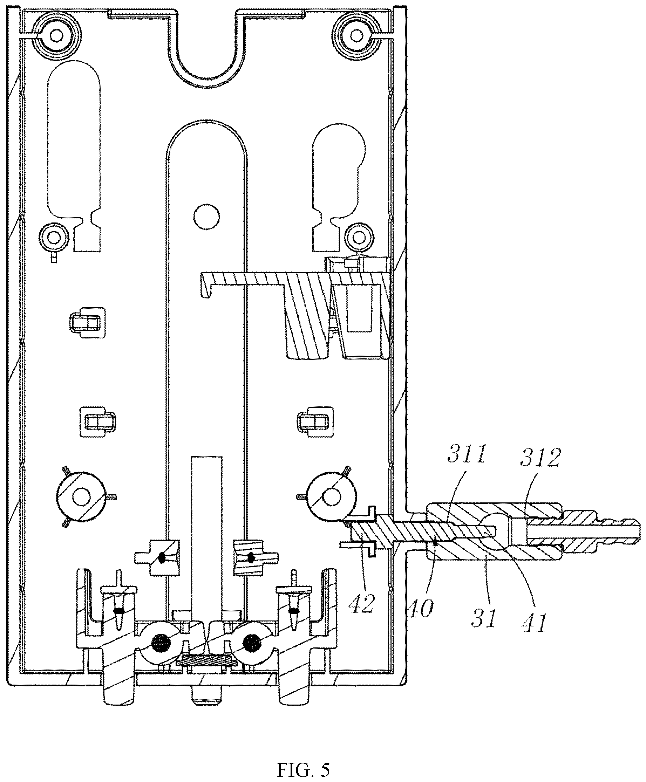

An emulsifying device in the specific embodiments of the present disclosure is described by taking a milk froth device on a beverage machine as an example. Referring to FIG. 1 to FIG. 5, in this embodiment, an emulsifying device 100 is connected to a steam source, so as to be used to generate a target liquid. The steam source may be a steam source on the beverage machine, or may be an independent steam source or a steam source dedicated to the milk froth device. The target liquid may be hot milk, or may be milk froth. The emulsifying device 100 includes a main body 21 defining a mixing chamber 211. The main body 21 is provided with a milk inlet channel 212, an air channel 213, a steam channel 214, and a liquid outlet 215, wherein the milk inlet channel 212, the air channel 213, the steam channel 214, and a liquid outlet 215 are all connected to the mixing chamber 211. The milk inlet channel 212 is provided with a liquid inlet 216. The main body 21 may be a Venturi apparatus. The steam channel 214 is connected to the steam source of the beverage machine. Due to the Venturi effect, when flowing into the mixing chamber 211, steam forms a negative pressure at the outlet end of the channel, so that the milk is sucked into the mixing chamber 211 through the liquid inlet 216 of the milk inlet channel 212. Milk and steam are mixed in the mixing chamber 211, or milk, stream and air are mixed in the mixing chamber 211, to form hot milk or milk froth, then hot milk or milk froth are discharged through the liquid outlet 215.

The emulsifying device 100 also includes a delivering assembly 30. The delivering assembly 30 selectively connected to the mixing chamber 211, and defines at least portion of a liquid flow path for delivering the source liquid from a container to the mixing chamber 211. The at least portion of the liquid flow path defined by the delivering assembly 30 may be the entire liquid flow path from the container to the mixing chamber 211, or may be a part of the liquid flow path from a conduit extending into the container to the mixing chamber 211. The container may be any container that is external to the emulsifying device 100 and contains milk, for example a milk container such as a milk box, a milk could and the like. The milk container may be placed adjacent to the emulsifying device 100, or may be placed in a refrigerating device on one side of the emulsifying device 100. The delivering assembly 30 may take the source liquid from the refrigerating device, or the milk container may be taken out of the refrigerating device when it is needed. Certainly, the container may also be connected to the emulsifying device 100 or be a part of the emulsifying device 100, allowing the user to add milk as needed. Milk or other liquid stored in the container is considered as the source liquid.

The emulsifying device 100 further includes a temperature sensor 40 and a controller. The temperature sensor 40 is configured to detect the temperature of the source liquid waiting to be delivered to the mixing chamber 211. The temperature sensor 40 is connected to the controller, and the controller responds to an output of the temperature sensor 40. The responding of the controller according to the output of the temperature sensor 40 may be controlling the flow of milk entering the mixing chamber 211, controlling the temperature of the steam and the flow of the steam, and so on, to ensure that the finally formed hot milk or milk froth meets the requirements of the user, for example, meeting the temperature and taste that should be possessed by the normal milk, thereby satisfying user requirements. In this embodiment, the temperature sensor 40 may be an NTC (thermistor), and it is high in sensitivity, small in size, simple in structure, and convenient to install on the emulsifying device.

The delivering assembly 30 includes a first connector 31, the first connector 31 is detachably connected to the temperature sensor 40. The temperature sensor 40 includes a detection probe 41, and the detection probe 41 is located on at least portion of the liquid flow path defined by the delivering assembly 30, that is, the source liquid flow through the at least portion of the liquid flow path can contact with the detection probe 41, so as to achieve temperature detection of the source liquid. The first connector 31 may be connected between the conduit extending into the container and the liquid inlet 216, another section of conduit may also be provided between the liquid inlet 216 and the first connector 31, and the two sections of conduits are respectively connected to the upstream end and the downstream end of the first connector 31. Certainly, it may also be that one end of the conduit extends into the container containing milk, another end of the conduit is connected to the liquid inlet 216 of the mixing chamber 211, and the first connector 31 is connected between two ends of the conduit. The number of conduits is not limited, as long as the connection with the first connector 31 can be achieved, so that the detection probe 41 can extend into the liquid flow path of the delivering assembly 30.

By setting the connector on the liquid flow path from mixing chamber 211 to the container, and by detachably connecting the connector to the detection probe 41 of the temperature sensor 40, it is unnecessary that the temperature sensor 40 be placed in the milk container in advance for temperature measurement. The detection probe 41 is detachably connected through the first connector 31, so the disassembling is convenient. The detection probe 41 will be exposed when the first connector 31 is detached, cleaning the detection probe 41 is very easy, and milk temperature can be detected in real time, ensuring the optimal temperature of outflowing milk.

In this embodiment, the emulsifying device 100 includes a housing 50. The main body 21 of the emulsifying device 100 is accommodated in the housing 50, and the detection probe 41 protrudes outward from the housing 50. Since the detection probe 41 is exposed from the housing 50, it is very convenient to connect the first connector 31 to the detection probe 41 or separate the first connector 31 from the detection probe 41, and cleaning of the detection probe 41 is also easier. In addition, the detection probe 41 is provided on the housing 50, which facilitates the fixing of the main body of the temperature sensor 40 in the housing 50 and connecting circuits, so that the use is more reliable for the user.

Certainly, in other embodiments, the detection probe 41 may also be hidden in a groove or a cavity on the housing 50 to prevent accidental touch from damaging the detection probe 41. Since a space is reserved on the periphery of the detection probe 41, the first connector 31 can be inserted into and connected to the detection probe 41 through the groove or the opening of the cavity, and a cleaning tool can also clean the detection probe 41 through the groove or the opening of the cavity. The detection probe 41 may also be movably connected to the housing 50, and the detection probe 41 can be operated to be exposed or hidden when needed. In each one of these manners, the first connector 31 can be detachably connected to the temperature sensor 40, and the detection probe 41 is located on the liquid flow path, so that the milk temperature can be detected in real time, and meanwhile, the cleaning of the detection probe 41 is facilitated.

In this embodiment, the detection probe 41 is connected to the housing 50 and is connected to the controller by means of a wire. The temperature sensor 40 is arranged on the housing 50 of the emulsifying device, that is, the temperature sensor 40 is arranged in the device instead of being inserted into the container, hence it is unnecessary that the temperature sensor be placed in the milk container in advance for temperature measurement. The detection probe 41 is connected through the first connector 31, so that cleaning and disassembling is convenient, and milk temperature can be detected in real time, ensuring the optimal temperature of outflowing milk. In addition, the detection probe 41 is fixed on the housing 50, that is, the temperature sensor 40 is not detachable, which ensures the service life of the temperature sensor 40. The temperature sensor 40 can be seen by removing the first connector 31, which is convenient to clean and reduces the operation difficulty.

Further, the delivering assembly 30 further includes a second connector 32 connected to the first connector 31. The second connector 32 is connected at the liquid inlet 216 of the mixing chamber 211, and the detection probe 41 is located on the liquid flow path upstream of the second connector 32. That is, the first connector 31 and the second connector 32 may be sequentially disposed along the flow path of the source liquid conveyed from the container to the mixing chamber 211. The two connectors may be mutually independent. The first connector 31 is detachably connected to the detection probe 41, the second connector 32 is detachably connected to the liquid inlet 216 of the mixing chamber 211; the independent disassembly of each one provides more choices to the user, and each one can be replaced independently when it needs to be replaced. The two connectors may be communicated through a conduit, or may be communicated in other manners.

In this embodiment, the first connector 31 and the second connector 32 are integrally formed. The integral forming here may be the two connectors being integrally formed, or may be the two connectors being integrally formed separately and then being connected into an integral whole. The two connectors integrally formed are better in sealing performance, and can be connected to the detection probe 41 and the liquid inlet 216 of the mixing chamber 211 at the same time, so that the use is reliable, and the operation is more convenient and faster. The first connector 31 and the second connector 32 are integrally formed, so that assembling is convenient, and they can be disassembled and cleaned as a whole. The assembling of the two connectors only needs to align them with the corresponding position to insert, and when the two connectors are detached, the detection probe 41 of the temperature sensor 40 could also be cleaned to ensure the sensitivity of the temperature sensor 40.

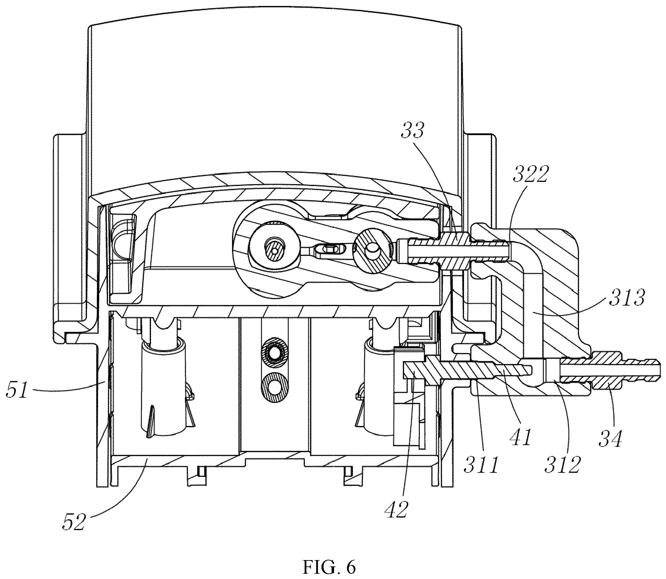

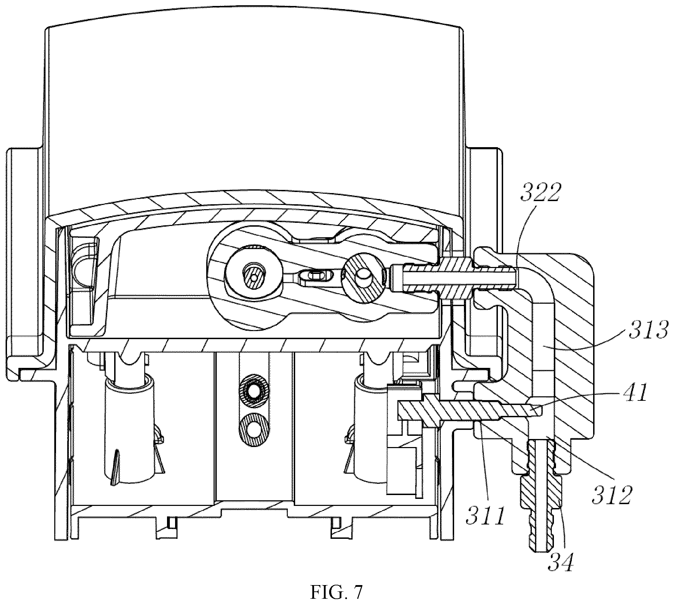

Referring to FIG. 6 and FIG. 7, the first connector 31 includes a first insertion hole 311. The first insertion hole 311 is connected to the liquid flow path of the delivering assembly 30, and the detection probe 41 is inserted into the first insertion hole 311 to achieve contact with the source liquid in the liquid flow path. The first connector 31 may be configured to have a preset elastic variable, for example, the first connector 31 itself is constructed of elastic material, the first insertion hole 311 is provided with elastic material, or the first connector 31 includes a sealing member made of an elastic material, that is, sealing between the first connector 31 and the detection probe 41 is achieved by providing an elastic material, so that the sealing performance is better when the detection probe 41 is inserted into the first insertion hole 311.

In order to facilitate the connection and disassembly of the two connectors, the connection direction of the first connector 31 and the detection probe 41 and the connection direction of the second connector 32 and the liquid inlet 216 are parallel. In this way, the connection and disassembly are more convenient, and the user operation is simple and labor-saving. Certainly, the connection direction of the first connector 31 and the detection probe 41 and the connection direction of the second connector 32 and the liquid inlet 216 may also be arranged at an angle. For example, the two connectors are connected by a flexible rubber or the two connectors are made of flexible rubber material, and each may be independently connected to the corresponding detection probe 41 and the liquid inlet 216; or the two connectors can move relative to each other so as to be connected to the corresponding detection probe 41 and the liquid inlet 216 at the same time, and as long as the two connectors are in contact with the corresponding detection probe 41 and the liquid inlet 216 and are sealed.

The direction from the liquid inlet 216 to the detection probe 41 is inclined downward relative to the horizontal direction, that is, the horizontal position of the second connector 32 is higher than the horizontal position of the first connector 31, and the positions of the second connector 32 and the first connector 31 are staggered relative to the horizontal direction, so that it is ensured that the source liquid in the liquid flow path fully flows through the detection probe 41, the temperature detection is more reliable, and the optimal temperature of outflowing milk is ensured. In addition, the inclined arrangement can ensure that the mounting space of the main body 21 and the temperature sensor 40 of the emulsifying device is more compact. The inclined angle α is set between 10° and 45°, specifically, 20° to 30°, which can ensure smooth suction of milk and reliable temperature detection. In other embodiments, the direction from the liquid inlet 216 to the detection probe 41 may be horizontally disposed, or may be disposed in the vertical direction, or obliquely upward relative to the horizontal direction, and all of them can achieve detecting the temperature of the source liquid while the source liquid being delivered.

As shown in FIG. 6, the first connector 31 further includes a liquid insertion hole 312. The first insertion hole 311 is a probe insertion hole, and the probe insertion hole is connected with the detection probe 41. The liquid insertion hole 312 is connected to the conduit. The connection direction of the probe insertion hole and the detection probe and the liquid input direction of the liquid insertion hole 312 are oppositely arranged along the same straight line. That is, after the liquid enters the connector, the liquid directly flows towards the detection probe 41, and the detection probe 41 can be fully contacted to ensure that the detection result is more accurate.

As shown in FIG. 7, in another embodiment, the connection direction of the probe insertion hole and the detection probe 41 and the liquid input direction of the liquid insertion hole are arranged at an angle. That is, the source liquid flows to the detection probe in a direction arranged at an angle with the extension direction of the detection probe 41, and also can make fully contact with the detection probe 41, and the flow of the source liquid is smoother.

In addition, a connecting channel 313 is formed between the first connector 31 and the second connector 32. The connecting channel 313 is arranged at an angle respectively relative to the connection direction of the first connector 31 connecting the detection probe 41 and the connection direction of the second connector 32 connecting the liquid inlet 216, and the connecting channel 313 extends along a straight line. The straight connecting channel 313 is provided to simplify the structure of the first connector 31 and the second connector 32, and the Venturi apparatus has requirements for suction force, so that the straight flow channel can easily suck milk into the mixing chamber 211 without affecting the making of the milk froth.

Further, the second connector 32 includes a second insertion hole 322, and the second connector 32 may also be configured to have a preset elastic variable, which is convenient for sealing connection with the liquid inlet 216. And the first connector 31 and the second connector 32 are both configured as an insertion hole form, and also ensure the consistency of connecting the detection probe 41 and the liquid inlet 216 at the same time. In this embodiment, the emulsifying device 100 further includes a third connector 33 connected between the second connector 32 and the liquid inlet 216. The third connector 33 is configured as a two-end insertion column form, one end of the third connector 33 is inserted into the second insertion hole 322 of the second connector 32, and another end of the third connector 33 is inserted into the liquid inlet 216, thereby facilitating the disassembly and cleaning of the second connector 32 and the third connector 33. The emulsifying device 100 further includes a fourth connector 34, which is connected between the conduit and the liquid insertion hole 312, and may also be considered as a milk pipe connector, so that connection between the container and the liquid inlet 216 can be achieved by only providing a conduit from the container to the fourth connector 34. The connection and disassembly of each connector are very simple, thereby facilitating the cleaning of each connector.

The housing 50 of the emulsifying device 100 includes a front housing 51 and a rear cover 52 which are combined in a front-back direction. The front housing 51 is provided with a first opening 511 and a second opening 512 spaced apart from each other. The third connector 33 extends out through the first opening 511. The detection probe 41 extends out through the second opening 512. The temperature sensor 40 includes a connecting end 42 connected between the detection probe 41 and the wire, and the connecting end 42 is supported to the rear cover 52. Fixing the temperature sensor 40 to the rear cover 52 and setting the detection probe 41 to extend through the opening of the front housing 51 ensures that the connection of the temperature sensor 40 is more reliable.

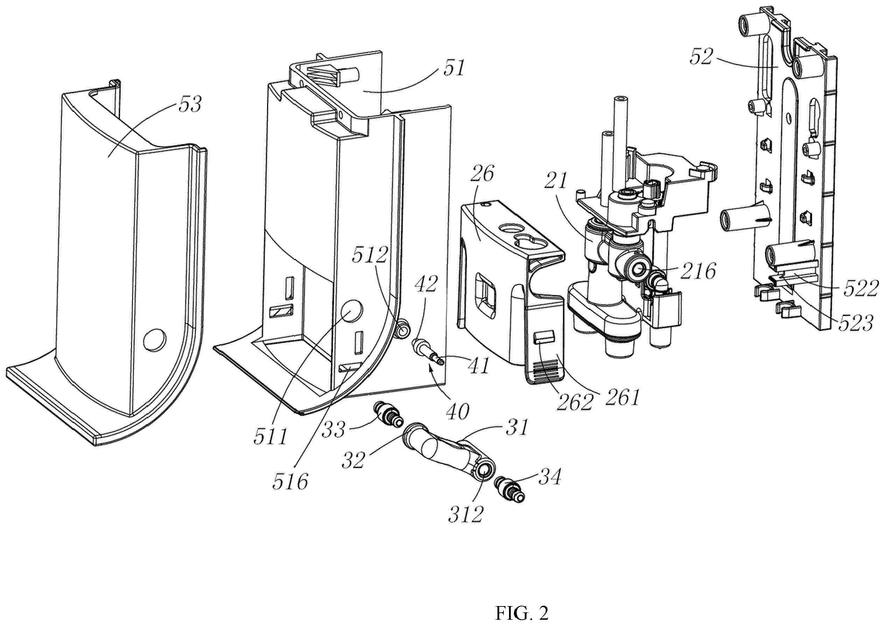

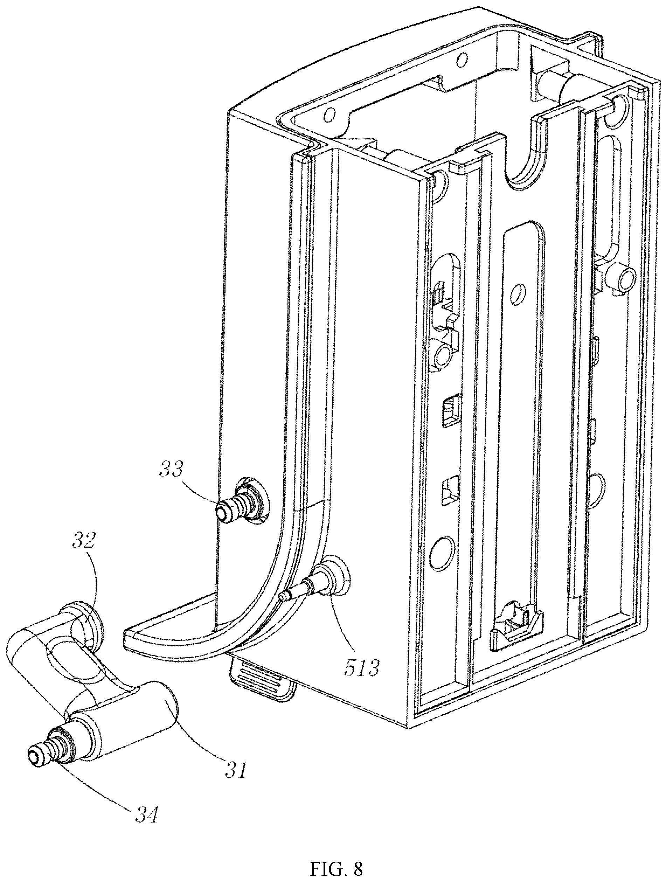

Specifically, referring to FIG. 2 and FIG. 8 to be combined, the rear cover 52 is provided with a support rib 522 protruding forward, and the free end of the support rib 522 is provided with a support groove 523 matching the shape of the connecting end 42 of the temperature sensor 40. The connecting end 42 is supported in the support groove 523, and the detection probe 41 extends out through the second opening 512. A projection 513 is provided on the front housing 51, a hole penetrates through the front housing 51 and the projection 513 to form the second opening 512, and a depth of the hole is greater than a wall thickness of the front housing 51. According to this, the contact area of the temperature sensor 40 and the front housing 51 is increased; not only the support stability of the detection probe 41 is ensured, but the position of the whole temperature sensor 40 is fixed as well; the temperature sensor 40 is prevented from sliding back and forth in the housing 50, and it is ensured that the detection probe 41 of the temperature sensor 40 is exposed outside and makes fully contact with milk.

In this embodiment, the detection probe 41 of the temperature sensor 40 is wrapped by metal, so that the conduction efficiency is high. The detection probe 41 is assembled on the housing 50, and the detection probe 41 of the sensor can be seen just after removing the first connector 31, so it is convenient to clean the detection probe 41. The detection probe 41 of the temperature sensor 40 is in contact with milk for a long time, so that milk residues are easily formed, and the sensor is insensitive. The detection probe 41 wrapped by metal is not only conductive fast, but also convenient to clean. When the Venturi apparatus is used to suck milks having different temperatures, since the temperatures of the hot milks and the hot milk froths made by the Venturi apparatus are different, the taste and quality of the milk coffee are affected. The temperature sensor 40 of the present disclosure is disposed on the housing 50 of the emulsifying device, and is wrapped by metal, has a high temperature conduction speed, and can detect milk temperature in real time; each time hot milk/milk froth is made, the temperature sensor 40 can quickly detect the real-time temperature within 3-5 seconds, and meanwhile, the controller responds to the output of the temperature sensor by controlling the milk inlet flow, the steam temperature/flow, and so on.

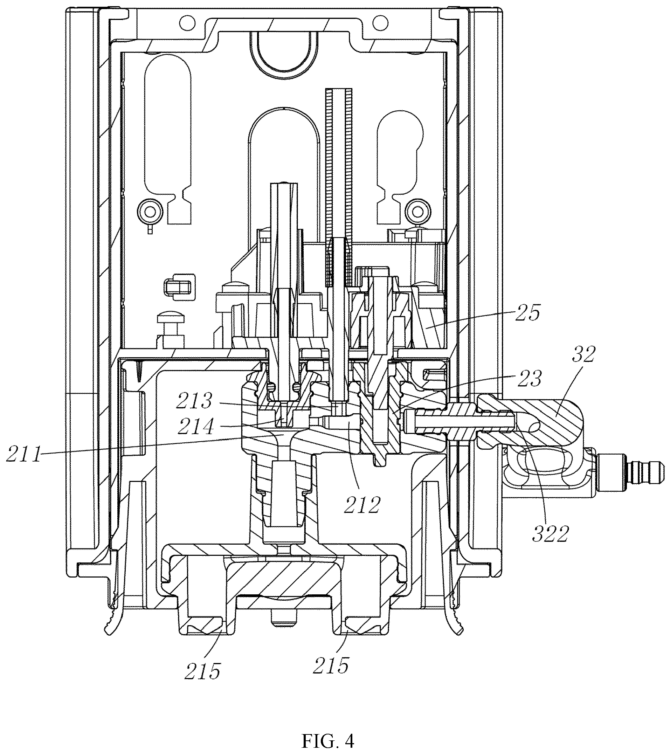

With continued reference to FIG. 2 and FIG. 4, an adjusting element 23 is arranged in the milk inlet channel 212 on the main body 21, and a stepping motor 25 drives the adjusting element 23 to rotate so as to change the feeding amount of milk into the mixing chamber 211. The adjustment element 23 forms an inlet groove. The adjustment element 23 rotates relative to the main body 21 to change the cross-sectional area of the inlet groove, and the controller can change the cross-sectional area for milk to flow in between different levels according to the real-time milk temperature detected by the temperature sensor 40 to ensure the best optimal temperature and taste of milk flowing out. When the conduit sucks milks with different temperatures, the temperature sensor 40 detects the temperatures of the milks in real time, even if the milks with different temperatures are sucked, the reaction speed of the temperature sensor 40 adopting the NTC only needs to be 3-5 seconds. During this process, the cross-sectional area of the inlet groove is changed in real time, so that it is ensured that the milk temperature is gradually increased, consequently the temperature of the final outlet milk is ensured, and the temperature and the taste of one cup of normal milk and coffee can be achieved. Taking a coffee machine as an example, when it needs to make a cup of milk coffee that requires both hot milk and hot milk froth, such as cappuccino or macchiato, the milk and the milk froth are needed to come out in a fixed sequence to ensure the logic that the milk froth comes out first and the milk comes out after. According to pre-set program and formula, when the production program needs milk froth, the coffee machine detects the temperature in real time through the temperature sensor 40, the rotation of the stepping motor 25 causes the adjusting element 23 to adjust the cross-sectional area to be suitable for entering the corresponding milk froth, and when the manufacturing program needs milk, the adjusting element 23 correspondingly rotates to adjust the cross section to be suitable for making the milk.

The above-mentioned stepping motor 25 is just one of various possible forms of the driving device. The driving device added above the milk froth device provided with the Venturi apparatus may be any driving form, as long as a certain angle of rotation can be achieved.

In addition, the manner in which the controller responds to the output of the temperature sensor 40 may also be a high-temperature or low-temperature alarm. For example, in the process of making milk coffee, if high-temperature milk (such as in some high-temperature regions or in a high-temperature weather) above 26°C is temporarily used or high-temperature milk is used by a user in a mistake manner, a problem of milk froth splashing may occur, thereby affecting user operation experience. The temperature is detected in real time through the temperature sensor 40, so that a reaction can be quickly made, a timely high-temperature alarm can be achieved, for example, the screen can send out an interface prompt, and meanwhile, the production of the milk/beverage is stopped, so that the generation of the splashing problem can be effectively prevented, and the safety of the user is ensured.

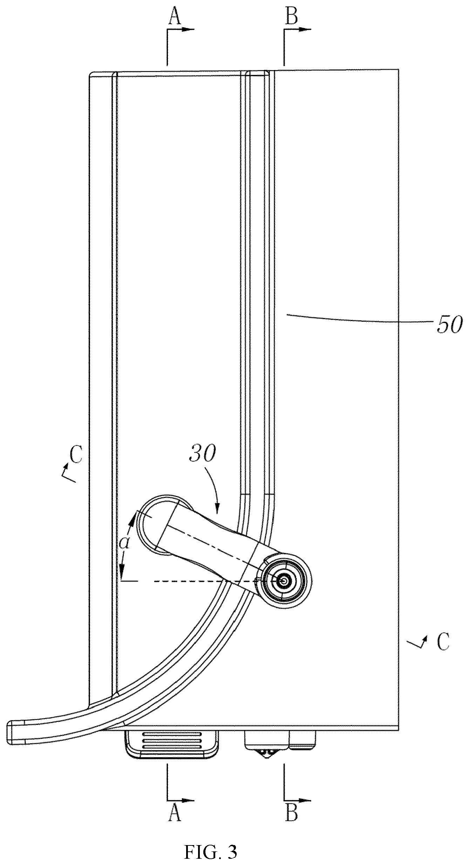

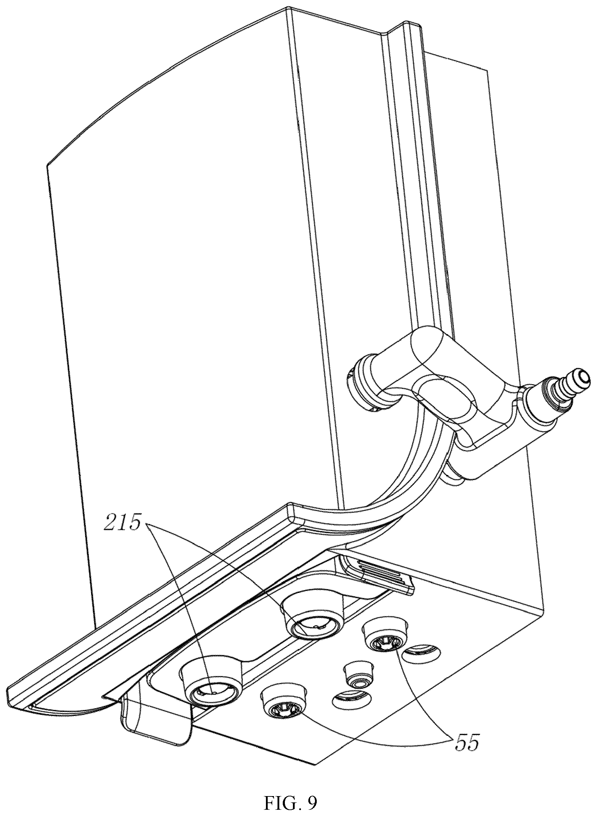

Referring to FIG. 9 combined with FIG. 2 and FIG. 3, the main body 21 of the emulsifying device 100 is detachably connected to the housing 50. The housing 50 is further provided with a beverage outlet 55 therein. The liquid outlet 215 is disposed in front of the beverage outlet 55, and the detection probe 41 is disposed behind the liquid inlet 216. That is, the main body 21 is disposed in front of the beverage outlet 55, so that the main body 21 served as the Venturi apparatus can be conveniently detached, so as to perform deep cleaning, thereby preventing the user from causing health hazards due to long-term use of milk residue accumulation.

A portion of the main body 21 is accommodated in the support cover 26, and the main body 21 is detachably connected to the housing 50 by the support cover 26. The left and right sides of the support cover 26 are respectively provided with a pressing plate 261 in a cantilever form. The pressing plate 261 is provided with a clamping hook 262, correspondingly, the front housing 51 is provided with a clamping groove 516. The supporting cover 26 drives the main body 21 to be inserted into the front housing 50 upwards until the clamping hook 262 falls into the clamping groove 516, so as to make the main body 21 be fixed in the front housing 51. Via pressing the pressing plate 261 on the two sides, the clamping hook 262 is separated from the clamping groove 516, so that the main body 21 can be detached from the front housing 51. In addition, the housing 50 further includes a decorative cover 53 disposed in front of the front housing 51, and the decorative cover 53 is detachably connected to the front housing 51 to cover the opening(s) of the front portion of the front housing 51 and the clamping groove 516, so that the aesthetics of the appearance of the emulsifying device is enhanced.

In the above embodiment, the emulsifying device 100 may be an independent milk froth device or may be mounted on the beverage machine and connected to a steam source of the beverage machine, and the emulsifying device may be independent relative to an outlet assembly of the beverage machine, or maybe the emulsifying device is integrated with a beverage outlet of the beverage machine.

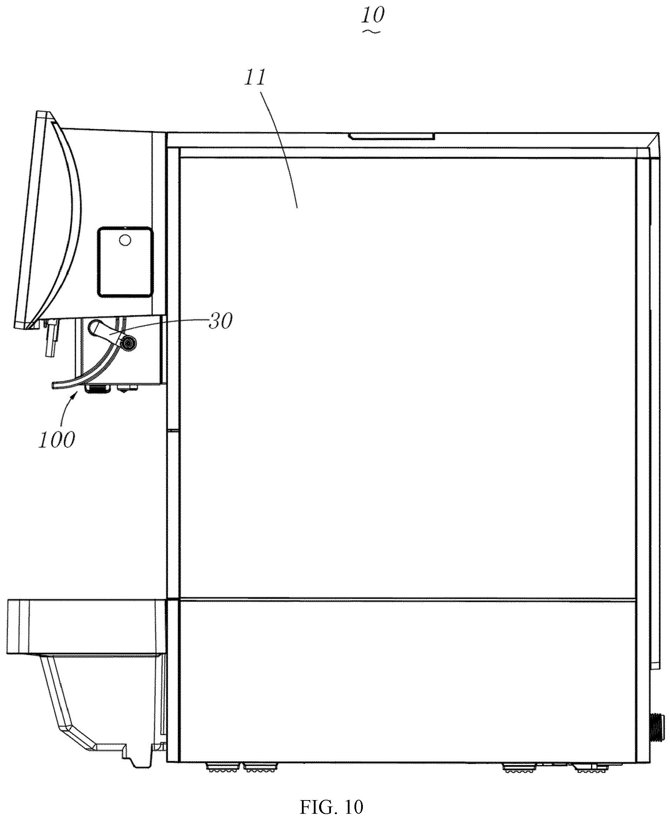

Referring to FIG. 10, the present disclosure further relates to a beverage machine 10. The beverage machine 10 includes a main machine body 11, and the main machine body 11 is provided with the above described emulsifying device 100. The beverage machine 10 may be a machine for brewing beverage, such as a tea drink machine, a coffee machine, a milk tea machine, and the like. The temperature sensor 40 may be disposed on the housing 50 of the emulsifying device 100, and certainly may also be disposed on the housing 50 of the beverage machine 10.

According to the emulsifying device and the beverage machine of present disclosure, by setting the connector, detachably connected to the detection probe of the temperature sensor, on the liquid flow path from the container to the mixing chamber, it is unnecessary to place the temperature sensor in the milk container in advance for temperature measurement; the detection probe is detachably connected through the first connector, the disassembling is convenient, the detection probe can be exposed when the first connector is detached, cleaning the detection probe is very easy, and milk temperature can be detected in real time, ensuring the optimal temperature of milk flowing out. Regardless of whether the user uses normal-temperature milk or low-temperature milk, the temperature sensor can detect milk temperature in real time near the milk inlet, so that the temperature of the hot milk or the milk froth of the finished product can be ensured, the reaction time is short, and the user can obtain a cup of the milk coffee with a standard temperature and a standard taste. When the user operates the high-temperature milk by mistake, a timely high-temperature alarm can be achieved, so that the splashing of the milk froth is prevented from affecting the user, and the operation experience of the user is ensured. In addition, the temperature sensor is arranged in the machine, so it is unnecessary to place the temperature sensor in the milk container in advance for temperature measurement; the temperature sensor is connected to the milk pipe through the connector, cleaning and disassembling are convenient, it is achieved to detect the milk temperature in real time, and the optimal temperature of the milk flowing out is ensured.

It should be understood that although the specification is described according to embodiments, not each embodiment only includes one independent technical solution, the description of the specification is merely for the description of clarity. Those skilled in the art should consider the description as a whole, and the technical solutions in the embodiments may also be appropriately combined to form other embodiments that can be understood by those skilled in the art.

A series of detailed descriptions listed above are merely specific descriptions of the feasibility embodiments of the present disclosure, and they are not intended to limit the scope of protection of the present disclosure, and the equivalent embodiments or changes that do not depart from the spirit of the present disclosure shall be included within the scope of protection of the present disclosure.

## Claims

1. An emulsifying device (100), connected to a steam source so as to generate target liquid, wherein the emulsifying device (100) comprises:
a main body (21), defining a mixing chamber (211);
a delivering assembly (30), selectively connecting to the mixing chamber (211), and defining at least portion of a liquid flow path for delivering source liquid from a container to the mixing chamber (211);
a temperature sensor (40), detecting a temperature of the source liquid to be delivered to the mixing chamber (211); and
a controller, connected to the temperature sensor (40), and responding to an output of the temperature sensor (40);
**characterized in that**: the delivering assembly (30) comprises a first connector (31), the first connector (31) is detachably connected to the temperature sensor (40), the temperature sensor (40) comprises a detection probe (41), and the detection probe (41) is located on the at least portion of the liquid flow path.

2. The emulsifying device (100) according to claim 1, wherein the emulsifying device (100) comprises a housing (50), the main body (21) is accommodated in the housing (50), the detection probe (41) extends outward from the housing (50).

3. The emulsifying device (100) according to claim 1, wherein the emulsifying device (100) comprises a housing (50), and the detection probe (41) is connected to the housing (50) and is connected to the controller by means of a wire.

4. The emulsifying device (100) according to claim 1, wherein the delivering assembly (30) further comprises a second connector (32) which is connected to the first connector (31), the second connector (32) is connected at a liquid inlet (216) of the mixing chamber (211), and the detection probe (41) is located on the liquid flow path upstream of the second connector (32).

5. The emulsifying device (100) according to claim 4, wherein at least one of the first connector (31) and the second connector (32) has a preset elastic variable, and a connection direction of the first connector (31) and the detection probe (41) is parallel to or at an angle relative to a connection direction of the second connector (32) and the liquid inlet (216).

6. The emulsifying device (100) according to claim 4, wherein a direction from the liquid inlet (216) to the detection probe (41) is inclined downward relative to a horizontal direction.

7. The emulsifying device (100) according to any one of claims 1 to 6, wherein the first connector (31) comprises a probe insertion hole (311) and a liquid insertion hole (312), and a connection direction of the probe insertion hole (311) and the detection probe (41) and a liquid input direction of the liquid insertion hole (312) are oppositely arranged along a straight line.

8. The emulsifying device (100) according to any one of claims 1 to 6, wherein the first connector (31) comprises a probe insertion hole (311) and a liquid insertion hole (312), and a connection direction of the probe insertion hole (311) and the detection probe (41) is arranged at an angle relative to a liquid input direction of the liquid insertion hole (312).

9. The emulsifying device (100) according to claim 4, wherein a connecting channel (313) is formed between the first connector (31) and the second connector (32), the connecting channel (313) is arranged at an angle relative to a connection direction of the first connector (31) and the detection probe (41), the connecting channel (313) is arranged at an angle relative to a connection direction of the second connector (32) and the liquid inlet (216), and the connecting channel (313) extends along a straight line.

10. The emulsifying device (100) according to claim 4, wherein the emulsifying device (100) further comprises a housing (50) and a third connector (33), the third connector (33) is connected between the second connector (32) and the liquid inlet (216), the housing (50) comprises a front housing (51) and a rear cover (52) which are combined in a front-back direction, the front housing (51) is provided with a first opening (511) and a second opening (512) spaced apart from each other, the third connector (33) extends out through the first opening (511), the detection probe (41) extends out through the second opening (512), the temperature sensor (40) comprises a connecting end (42) connected between the detection probe (41) and a wire, and the connecting end (42) is supported to the rear cover (52).

11. The emulsifying device (100) according to any one of claims 1 to 6, 9 and 10, wherein the emulsifying device (100) further comprises a fourth connector (34), the first connector (31) comprises a probe insertion hole (311) and a liquid insertion hole (312), a conduit is connected between the first connector (31) and the container, and the fourth connector (34) is connected between the conduit and the liquid insertion hole (312).

12. The emulsifying device (100) according to claim 10, wherein the first connector (31) comprises a first insertion hole (311), the second connector (32) comprises a second insertion hole (322), the third connector (33) is configured as an insertion column, the detection probe (41) is inserted into the first insertion hole (311), one end of the insertion column is inserted into the second insertion hole (322), and another end of the insertion column is inserted into the liquid inlet (216).

13. The emulsifying device (100) according to claim 1, wherein the emulsifying device (100) comprises a housing (50), the main body (21) is detachably connected to the housing (50), a beverage outlet (55) is further provided in the housing (50), a liquid outlet (215) of the mixing chamber (211) is provided in front of the beverage outlet (55), and the detection probe (41) is provided behind a liquid inlet (216) of the mixing chamber (211).

14. The emulsifying device (100) according to any one of claims 1 to 13, wherein manners in which the controller responds to the output of the temperature sensor (40) comprise at least one of the following: reminding based on a temperature of the source liquid detected exceeding or being lower than a preset temperature, stopping beverage making, controlling a flow of the source liquid, controlling a temperature of steam, and controlling a flow of the steam.

15. A beverage machine, comprising a main body machine, wherein the main body machine is provided with the emulsifying device (100) according to any one of claims 1 to 14.
